# EUROPEAN PATENT SPECIFICATION

(11) **EP 3 981 661 B1**
(45) Date of publication and mention of the grant of the patent: **11.12.2024**
(21) Application number: 21202006.9
(22) Date of filing: 11.10.2021
(51) Int. Cl.: B60W 30/18, F16H 59/18, F16H 61/21, B60W 30/00

(54) **BRAKING METHOD AND SYSTEM OF AN AGRICULTURAL OR WORK VEHICLE EQUIPPED WITH A HYDRAULIC TRANSMISSION**
BREMSVERFAHREN UND -SYSTEM FÜR EIN LANDWIRTSCHAFTLICHES ODER ARBEITSFAHRZEUG MIT EINEM HYDRAULISCHEN GETRIEBE
PROCÉDÉ ET SYSTÈME DE FREINAGE D'UN VÉHICULE AGRICOLE OU D'UN ENGIN DE TRAVAIL ÉQUIPÉ D'UNE TRANSMISSION HYDRAULIQUE

(30) Priority: 09.10.2020 IT 202000023857
(43) Date of publication of application: 13.04.2022
(73) Proprietor: CNH Industrial Italia S.p.A., 10156 Torino (IT)
(72) Inventor: GARRAMONE, Adriano, 73100 Lecce (IT); LIBERTI, Stefano, 73100 Lecce (IT); GRAVILI, Andrea, 73100 Lecce (IT); VENEZIA, Antonio, 10153 Torino (IT)
(74) Representative: CNH Industrial IP Department

(56) References cited:
- EP-A2- 0 426 443
- EP-A2- 2 119 943

## Description

### Field of the invention

The present invention relates to the field of braking systems for an agricultural or work vehicle equipped with hydraulic transmission.

### State of the Art

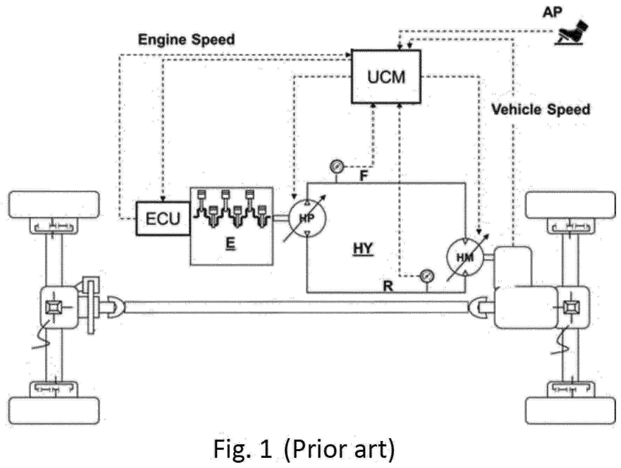

Motorized agricultural or work vehicles are well known for handling materials and performing specific demanding tasks. With reference to Figure 1, a prime mover E, generally an internal combustion, drives a variable displacement HP hydraulic pump in rotation, which powers a variable displacement hydraulic motor HM operatively connected to the hydraulic pump defining a so-called hydrostat HY, in which a forward hydraulic line F and a return hydraulic line R interconnect the hydraulic pump with the hydraulic motor. As a reference EP0426443A1 discloses a vehicle with an engine which drives a pump and an hydraulic motor to a wheel, comprising a braking mode; EP2119943A2 discloses a vehicle with an engine which drives a pump and an hydraulic motor to a wheel, comprising only a driving mode.

To better define the diagram in Figure 1, this transmission is referred to as a "series" hydraulic transmission, in the sense that the connection between the prime mover and the vehicle wheels occurs exclusively through the hydrostat.

The displacement of the hydraulic pump is electrically controlled. Generally, there is a control map of the hydraulic pump displacement which allows to control the displacement of this according to the rotation speed of the prime mover. Typically, the relationship between the pump displacement and the speed of the prime mover is linear and the displacement grows with increasing speed.

The displacement of the hydraulic motor is electrically controlled.

Generally, there is a map of adjustments of displacement of the hydraulic motor, which allows the relative displacement to be controlled as a function of the pressure generated on the forward F and return R hydraulic lines or as a function of the speed of the vehicle.

Therefore the ordinary control strategies of the hydraulic motor displacement are:
- "pressure control": the displacement is kept constant at its minimum value until the pressure of the F line in the case of forward travel or of the R line in the case of reverse travel reaches a predetermined value beyond which the displacement begins to increase up to its maximum value,
- "speed control": the displacement is kept constant at its maximum value until the vehicle speed reaches a predetermined speed value beyond which the displacement begins to decrease to its minimum value.

When the driver wants to slow down, the first action he takes is to release the accelerator pedal.

In the case of "pressure control" of the hydraulic motor displacement, the pressure of the hydraulic line of the forward travel, being not pressurized, causes the hydraulic motor to reaches its minimum displacement and therefore to have a low braking effect.

Similarly, in the case of "speed control" of the hydraulic motor displacement, if the accelerator pedal is released when the vehicle travels at a speed higher than the aforementioned predetermined speed value, the displacement is low, if not minimal, with the same effects described above.

Thus, when the vehicle has to face, for example, a long and steep descent, if the driver releases the accelerator pedal, the vehicle continues to move at high speed. This could lead the braking system to go into crisis or in any case to reduce its braking capacity to the point of rendering critical the safety of the vehicle itself.

If not specifically excluded in the detailed description that follows, what is described in this chapter is to be considered as an integral part of the detailed description.

### Summary of the invention

The object of the present invention is to improve the behavior of an agricultural or work vehicle equipped with a hydraulic transmission, in particular in relation to the relative braking capacity and as a consequence in relation to the safety of the vehicle itself.

The basic idea of the present invention is to increase the displacement of the variable displacement hydraulic motor when it is detected that the vehicle, in dynamic conditions, need to be braked.

The invention is defined in the appended independent method claim 1 and in the appended independent device claim 10. 1

In order to intervene on the displacement of the hydraulic motor, the control is carried out by means of an electric actuator.

In dynamic conditions, if the accelerator pedal is fully released and at least one further control condition occurs, it is determined that the vehicle needs to be braked and an increase in the displacement of the hydraulic motor is forced so as to restore vehicle speed to safe conditions.

Preferably, the engine displacement is brought to the maximum possible.

One of the conditions to be considered to trigger this signal can be
- the deceleration of the vehicle is less than a predetermined deceleration value,
- the speed of the vehicle exceeds a predetermined speed threshold,
- the vehicle is downhill.

Thanks to the present invention, when the vehicle is downhill, an increase in the displacement of the hydraulic motor is forced which starts to pressurize the hydraulic oil like a hydraulic pump, pressurizing hydraulic oil in the line opposite to the direction of travel and inducing the hydraulic pump to work like a hydraulic motor connected to the prime mover. Advantageously, an operative connection is established between the hydraulic motor and the prime mover, and by increasing the displacement of the motor, and consequently the flow rate of hydraulic fluid pumped towards the pump, there is a greater beneficial effect of braking the vehicle.

According to a preferred variant of the invention that combines with any of the previous ones, depressing the accelerator pedal restores the ordinary strategy of controlling the displacement of the hydraulic motor.

According to another preferred variant of the invention, a pressure on the accelerator pedal first leads to gradually reducing the displacement of the hydraulic motor up to the value that would have occurred according to the ordinary strategy of controlling the displacement of the hydraulic motor and, subsequently, restores the ordinary strategy of controlling the displacement of the hydraulic motor. Advantageously, a sudden reduction in the displacement of the hydraulic motor is prevented from inducing a sudden acceleration of the vehicle downstream.

The dependent claims describe preferred variants of the invention, forming an integral part of this description.

### Brief description of the figures

Further objects and advantages of the present invention will become clear from the following detailed description of an example of its embodiment (and its variants) and from the attached drawings given purely by way of non-limiting explanation, in which:
Figure 1 shows a diagram, according to the known art, of a propulsion system of an agricultural or work machine according to the known art;
Figures 2 and 3 show flow diagrams representing as many preferred variants of the method object of the present invention;

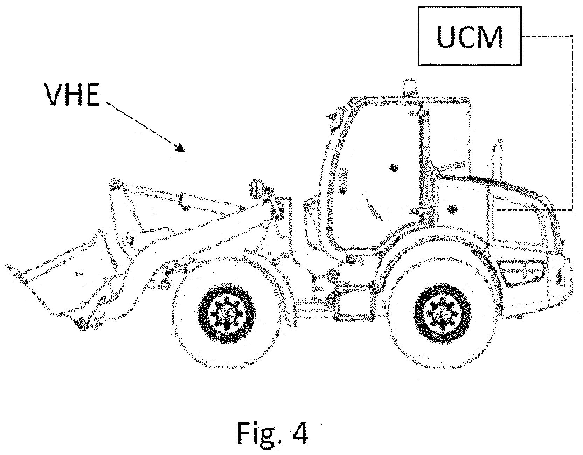

Figure 4 shows an agricultural or work vehicle in which the present invention is implemented.

The same reference numbers and letters in the figures identify the same elements or components or functions.

It should also be noted that the terms "first", "second", "third", "upper", "lower" and the like can be used here to distinguish various elements. These terms do not imply a spatial, sequential or hierarchical order for the modified elements unless it is specifically indicated or inferred from the text.

The elements and features illustrated in the various preferred embodiments, including the drawings, can be combined with each other without however departing from the scope of this application as described below.

### Detailed description of exemplary embodiments

According to the present invention, the complete release (C2) of the acceleration pedal in dynamic conditions (C1) of the vehicle activates the monitoring of the safety conditions of the vehicle, which expresses an judgment on the need to provide autonomous braking (C3) of the vehicle. The idea of the invention is to provide an autonomous contribution to vehicle braking through the hydraulic transmission HY, temporarily replacing the ordinary strategy of controlling the displacement of the hydraulic motor.

This contribution is completely independent on the vehicle service brakes activation.

According to the present invention, the hydraulic motor HM is of the electrohydraulic type, in which its displacement is electrically controlled by the processing unit UCM on board the vehicle.

The judgment relating the braking need consists, for example, in detecting that the vehicle is traveling down a road.

The vehicle is equipped with a processing unit UCM configured to receive a signal from the accelerator pedal (or lever) which is 0% at the minimum incline and 100% at the maximum inclination.

The UCM processing unit is operationally associated with a sensor, for example the phonic wheel, designed to detect the rotation speed of the prime mover "Engine Speed".

The processing unit is operationally associated with a sensor, for example associated with a drive shaft, to detect a vehicle speed "Vehicle speed".

The processing unit is configured to detect the occurrence of the following conditions:
- C1 vehicle dynamic conditions, i.e. Vehicle speed > 0,
- C2 complete release of the pedal (or lever), i.e. 0% inclination of the accelerator pedal,
- C3 signal indicating the need to provide autonomous vehicle braking.

When it appears that all the three previous conditions C1 - C3 are satisfied, then an increase in the displacement of the hydraulic motor is forced up to a predetermined value. The signal indicating the need to provide autonomous vehicle braking includes at least one of:
- the deceleration of the vehicle is less than a predetermined acceleration threshold,
- the vehicle speed exceeds a predetermined speed threshold,
- the vehicle is downhill.

Therefore, the value of the displacement to which the hydraulic motor is forced can be chosen for example to increase the deceleration of the vehicle beyond a predetermined threshold, or it can be the maximum value of the displacement.

Therefore, unlike an ordinary strategy for controlling the displacement of the hydraulic motor, the displacement, at the complete release of the accelerator pedal (C2), when the vehicle is in dynamic conditions (C1) and a signal indicates that the vehicle must be braked, displacement of the hydraulic motor is forced to increase obtaining the engine brake typical of vehicles equipped with mechanical transmission, that is, by means of transmission shafts, gears, etc. without a hydrostat.

Often the prime mover is a Diesel cycle, which offers a good braking effect especially if equipped with a variable geometry turbo compressor.

According to a preferred variant of the invention, as soon as the accelerator pedal (or lever) is touched, the ordinary operation of the transmission is re-established as described above.

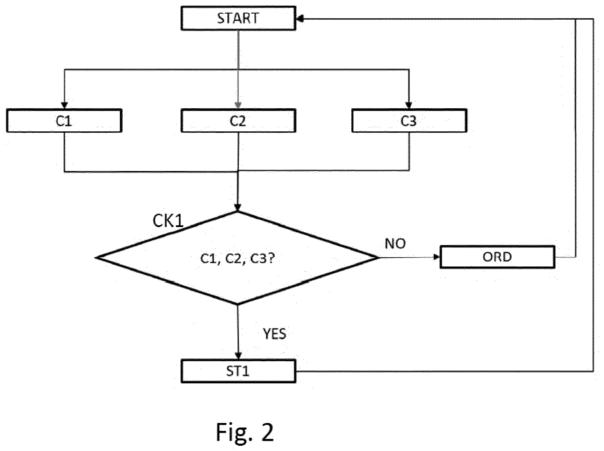

This preferred variant of the invention is schematized with the help of Figure 2, which shows an exemplary flow chart of said variant.

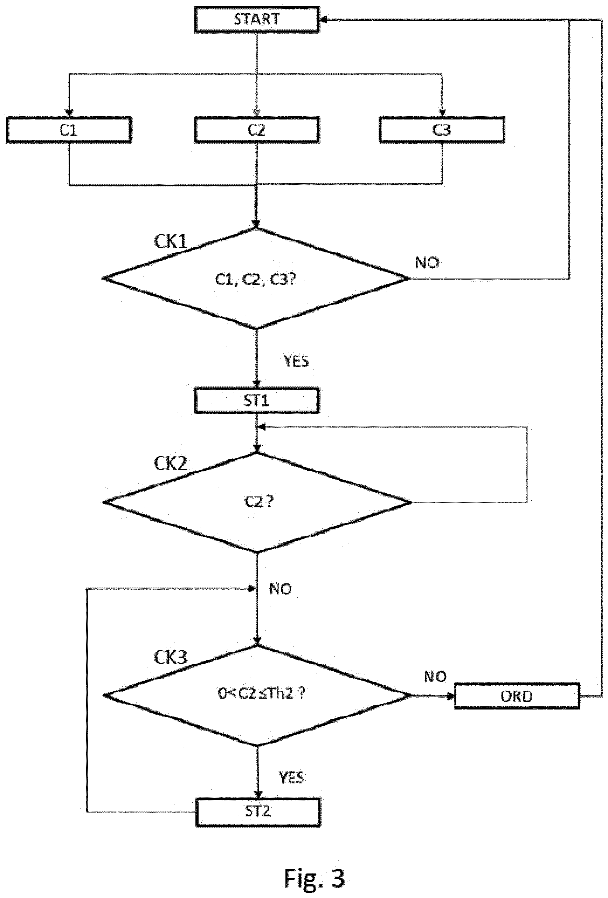

According to a further preferred variant of the invention, shown in Figure 3, this ordinary operation is not re-established (immediately) when the accelerator pedal is activated, but only when a relative inclination P% exceeds a predetermined threshold Th2, for example, set at 10%.

In the interval between 0 and Th2, the displacement of the hydraulic motor is reduced proportionally to the inclination of the accelerator pedal up to a predetermined value in Th2. The predetermined value of displacement in Th2 can be
- Predetermined,
- Minimum,
- The displacement value that the ordinary control strategy causes when the accelerator pedal is in Th2, when the strategy is of the "pressure control" type.

The proportional reduction of the displacement of the hydraulic motor is summarized by step ST2.

When the displacement value is predetermined or minimum, in the interval between O% and Th2 it can also be envisaged to inhibit the prime mover from receiving the accelerator pedal position signal.

When the inclination of the accelerator pedal exceeds Th2 up to 100%, the prime mover is controlled as in ordinary conditions ORD, i.e. the rotational speed of the prime mover and therefore the displacement of the hydraulic pump are linearly dependent on the inclination of the accelerator pedal, while the hydraulic motor is controlled with the ordinary control strategy, which is typically in "pressure" or "speed" control. Then, it resumes from the beginning to monitor the occurrence of the three conditions C1, C2, C3.

It is worth highlighting that the nature of the ordinary control strategy is not relevant for the purposes of the present invention, which is independent of it.

With reference to Figure 3, after the increase in the displacement of the hydraulic motor is forced in ST1, the accelerator pedal fully released condition continues to be checked in a loop, when this condition is no longer verified (CK2 - NO), then it is checked (CK3) whether the relative inclination is between 0% and Th2, in the positive case (CK3 - YES) then the displacement of the hydraulic motor is reduced (ST2) as described above and it resumes checking (CK3) whether its inclination is between 0% and Th2. If not (CK3 - NO), the ordinary strategy of controlling the displacement of the hydraulic motor is restored and it restarts from the beginning (START).

It is worth highlighting that after verification (CK3) if the inclination of the accelerator pedal is between 0% and Th2 a complete new release of the accelerator pedal occurs, being the control dynamics many times faster than the dynamics of the engine displacement control hydraulic, it returns to step ST1 in a transparent way for the driver.

The present invention can be advantageously realized by means of a computer program, which comprises coding means for carrying out one or more steps of the method, when this program is executed on a computer. Therefore, it is intended that the scope of protection includes said computer program and further computer readable means comprising a recorded message, said computer readable means comprising program coding means for carrying out one or more steps of the method, when said program is run on a computer.

From the above description, the person skilled in the art is able to realize the object of the invention without introducing further construction details.

## Claims

1. Braking method of an agricultural or work vehicle equipped with a hydraulic transmission (HY) wherein a hydraulic pump (HP) is driven by a prime mover (E) to power a hydraulic motor (HM), wherein the hydraulic motor is operationally connected to at least one vehicle wheel (W), the hydraulic pump having variable displacement with the relative displacement controlled proportionally to the rotation speed (Engine Speed) of the prime mover (E), the hydraulic motor having variable displacement, the method comprising a first step of forcing (ST1) a displacement increase of the hydraulic motor (HM) till to a predetermined value, when, in dynamic conditions (C1) of the vehicle, a relating accelerator pedal is completely released (C2) and a signal (C3) indicating the need to brake the vehicle is present and when the displacement of the hydraulic motor is increased following said first step (ST1), as a result of a pressure on the accelerator pedal, the method comprises a third step (ORD) to restore the ordinary control strategy of the displacement of the hydraulic motor;
said braking method is further **characterized in that** said ordinary control strategy provides that the displacement of the hydraulic motor is inversely proportional to the speed of the vehicle.

2. Method according to claim 1, wherein said predetermined value of the displacement is chosen so as to reduce the speed of the vehicle below a predetermined threshold.

3. Method according to claim 1, wherein said predetermined displacement value is maximum for said hydraulic motor.

4. Method according to any one of claims 1 - 3, wherein said predetermined value of the displacement is achieved by means of a predetermined profile for increasing the displacement.

5. Method according to any one of the preceding claims 1 - 4, wherein said signal is generated when
- a deceleration of the vehicle is less than a predetermined speed threshold and/or
- a vehicle speed exceeds a predetermined speed threshold and/or
- the vehicle is downhill.

6. Method according to any of the previous claims, wherein said restoration is performed when an inclination of the accelerator pedal exceeds a predetermined threshold (Th2).

7. Method according to any of the previous claim, wherein, as a consequence of a pressure on the accelerator pedal between a condition of complete release and said predetermined inclination threshold (Th2), the method comprises a second step (ST2) of reducing the displacement of the hydraulic motor, proportionally to the inclination of the accelerator pedal, without restoring the ordinary control strategy of the hydraulic motor.

8. Computer program comprising program-coding means suitable for carrying out all steps (ST1, ORD, ST2) of any one of claims 1 to 7, when said program is run on a computer.

9. Computer readable means comprising a recorded program, said computer readable means comprising program coding means adapted to perform all steps (ST1, ORD, ST2) of any one of claims 1 to 7, when said program is run on a computer.

10. Agricultural or work vehicle equipped with a hydraulic transmission (HY) wherein a hydraulic pump (HP) is driven by a prime mover (E) to power a hydraulic motor (HM), wherein the hydraulic motor is operationally connected with at least a vehicle wheel, the hydraulic pump having a variable displacement, arranged to vary the relative displacement proportionally to the rotation speed (Engine Speed) of the prime mover (E), the hydraulic motor being of electrohydraulic variable displacement, the vehicle further comprising processing means (UCM) configured for forcing (ST1) a displacement increase of the hydraulic motor (HM) till to a predetermined value, when, in dynamic conditions (C1) of the vehicle, a relating accelerator pedal is completely released (C2) and a signal (C3) indicating the need to brake the vehicle is present and when the displacement of the hydraulic motor is increased following said first step (ST1), as a result of a pressure on the accelerator pedal, the processing means are further configured to restore the ordinary control strategy of the displacement of the hydraulic motor;
said vehicle is further **characterized in that** said ordinary control strategy provides that the displacement of the hydraulic motor is inversely proportional to the speed of the vehicle.

## Patentansprüche

1. Bremsverfahren für ein landwirtschaftliches Fahrzeug oder ein Arbeitsfahrzeug, das mit einem hydraulischen Getriebe (HY) ausgestattet ist, wobei eine Hydraulikpumpe (HP) von einem ersten Antrieb (E) angetrieben wird, um einen Hydraulikmotor (HM) anzutreiben, wobei der Hydraulikmotor wirkend mit zumindest einem Fahrzeugrad (W) verbunden ist, wobei die Hydraulikpumpe eine variable Verstellung aufweist, bei der die relative Verstellung proportional zur Rotationsgeschwindigkeit (Motorgeschwindigkeit) des ersten Antriebs (E) gesteuert ist, wobei der Hydraulikmotor eine variable Verstellung aufweist, wobei das Verfahren einen ersten Schritt eines Erzwingens (ST1) einer Verstellungssteigerung des Hydraulikmotors (HM) bis zu einem vorbestimmten Wert aufweist, wenn, in dynamischen Zuständen (C1) des Fahrzeugs, ein zugehöriges Gaspedal vollständig losgelassen (C2) wird und ein Signal (C3), das die Notwendigkeit zum Bremsen des Fahrzeugs angibt, vorliegt und wenn die Verstellung des Hydraulikmotors nachfolgend auf den ersten Schritt (ST1) in Folge eines Drucks auf das Gaspedal erhöht wird, wobei das Verfahren einen dritten Schritt (ORD) aufweist, um die normale Steuerungsstrategie der Verstellung des Hydraulikmotors wiederherzustellen;
wobei das Bremsverfahren des Weiteren **dadurch gekennzeichnet ist, dass**
die normale Steuerungsstrategie vorsieht, dass die Verstellung des Hydraulikmotors indirekt proportional zur Fahrzeuggeschwindigkeit ist.

2. Verfahren nach Anspruch 1, wobei der vorbestimmte Wert der Verstellung so gewählt wird, dass die Fahrzeuggeschwindigkeit unter einen vorbestimmten Grenzwert reduziert wird.

3. Verfahren nach Anspruch 1, wobei die vorbestimmte Verstellung maximal für den Hydraulikmotor ist.

4. Verfahren nach einem der Ansprüche 1 bis 3, wobei der vorbestimmte Wert der Verstellung mittels eines vorbestimmten Profils zur Steigerung der Verstellung erreicht wird.

5. Verfahren nach einem der vorhergehenden Ansprüche 1 bis 4, wobei das Signal erzeugt wird, wenn
- eine Verzögerung des Fahrzeugs geringer als ein vorbestimmter Geschwindigkeitsgrenzwert ist und/oder
- eine Fahrzeuggeschwindigkeit einen vorbestimmten Geschwindigkeitsgrenzwert überschreitet und/oder
- das Fahrzeug bergab fährt.

6. Verfahren nach einem der vorhergehenden Ansprüche, wobei die Wiederherstellung ausgeführt wird, wenn eine Neigung des Gaspedals einen vorbestimmten Grenzwert (Th2) überschreitet.

7. Verfahren nach einem der vorhergehenden Ansprüche, wobei als Folge eines Drucks auf das Gaspedal zwischen einem Zustand einer vollständigen Freigabe und dem vorbestimmten Neigungsgrenzwert (Th2) das Verfahren einen zweiten Schritt (ST2) zur Reduzierung der Verstellung des Hydraulikmotors, die proportional zur Neigung des Gaspedals ist, aufweist, ohne die normale Steuerungsstrategie des Hydraulikmotors wiederherzustellen.

8. Computerprogramm, das Programmkodierungsmittel aufweist, die dazu eingerichtet sind, alle Schritte (ST1, ORD, ST2) nach einem der Ansprüche 1 bis 7 auszuführen, wenn das Programm auf einem Computer ausgeführt wird.

9. Computerlesbare Mittel, die ein gespeichertes Programm aufweisen, wobei die computerlesbaren Mittel Programmkodierungsmittel aufweisen, die dazu eingerichtet sind, alle Schritte (ST1, ORD, ST2) nach einem der Ansprüche 1 bis 7 auszuführen, wenn das Programm auf einem Computer ausgeführt wird.

10. Landwirtschaftliches Fahrzeug oder Arbeitsfahrzeug, das mit einem Hydraulikgetriebe (HY) ausgestattet ist, wobei eine Hydraulikpumpe (HP) von einem ersten Antrieb (E) zum Antreiben eines Hydraulikmotors (HM) angetrieben ist, wobei der Hydraulikmotor wirkend mit zumindest einem Fahrzeugrad verbunden ist, wobei die Hydraulikpumpe eine variable Verstellung aufweist, die dazu eingerichtet ist, die relative Verstellung proportional zur Rotationsgeschwindigkeit (Motorgeschwindigkeit) des ersten Antriebs (E) zu variieren, wobei der Hydraulikmotor vom Typ einer elektrohydraulischen, variablen Verstellung ist, wobei das Fahrzeug des Weiteren Verarbeitungsmittel (UCM) aufweist, die dazu eingerichtet sind, eine Verstellungssteigerung des Hydraulikmotors (HM) bis zu einem vorbestimmten Wert zu erzwingen, wenn, in dynamischen Zuständen (C1) des Fahrzeugs, ein zugehöriges Gaspedal vollständig freigegeben (C2) ist und ein Signal (C3) vorliegt, das die Notwendigkeit zum Bremsen des Fahrzeugs angibt, und wenn die Verstellung des Hydraulikmotors nachfolgend auf den ersten Schritt (ST1) in Folge eines Drucks auf das Gaspedal erhöht wird, wobei die Verarbeitungsmittel des Weiteren dazu eingerichtet sind, die normale Steuerungsstrategie der Verstellung des Hydraulikmotors wiederherzustellen;
wobei das Fahrzeug des Weiteren **dadurch gekennzeichnet ist, dass** die normale Steuerungsstrategie vorsieht, dass die Verstellung des Hydraulikmotors indirekt proportional zur Fahrzeuggeschwindigkeit ist.

## Revendications

1. Procédé de freinage d'un véhicule agricole ou d'un véhicule de travail équipé d'une transmission hydraulique agricole (HY), dans lequel une pompe hydraulique (HP) est entraînée par un moteur primaire (E) pour alimenter un moteur hydraulique (HM), dans lequel le moteur hydraulique est raccordé de manière opérationnelle à au moins une roue du véhicule (w), la pompe hydraulique étant à cylindrée variable, la cylindrée relative étant commandée proportionnellement à la vitesse de rotation (Engine Speed) du moteur primaire (E), le moteur hydraulique étant à cylindrée variable, le procédé comprenant une première étape consistant à forcer (ST1) une augmentation de cylindrée du moteur hydraulique (HM) jusqu'à une valeur prédéterminée, lorsque, dans des conditions dynamiques (C1) du véhicule, une pédale d'accélération correspondante est complètement relâchée (C2) et un signal (C3) indiquant la nécessité de freiner le véhicule se déclenche et lorsque la cylindrée du moteur hydraulique est augmentée suite à ladite première étape (ST1), en raison d'une pression sur la pédale d'accélération, le procédé comprend une troisième étape (ORD) pour rétablir la stratégie de commande ordinaire de la cylindrée du moteur hydraulique ;
ledit procédé de freinage est en outre **caractérisé en ce que**
ladite stratégie de commande ordinaire prévoit que la cylindrée du moteur hydraulique soit inversement proportionnelle à la vitesse du véhicule.

2. Procédé selon la revendication 1, dans lequel ladite valeur prédéterminée de la cylindrée est choisie de manière à réduire la vitesse du véhicule en dessous d'un seuil prédéterminé.

3. Procédé selon la revendication 1, dans lequel ladite valeur de la cylindrée prédéterminée est maximale pour ledit moteur hydraulique.

4. Procédé selon l'une quelconque des revendications 1 à 3, dans lequel ladite valeur prédéterminée de la cylindrée est obtenue au moyen d'un profil prédéterminé pour augmenter la cylindrée.

5. Procédé selon l'une quelconque des revendications précédentes 1 à 4, dans lequel ledit signal est généré lorsque
- une décélération du véhicule est inférieure à un seuil de vitesse prédéterminé et/ou
- une vitesse du véhicule excède un seuil de vitesse prédéterminé et/ou
- le véhicule est en descente.

6. Procédé selon l'une quelconque des revendications précédentes, dans lequel ladite restauration est effectuée lorsqu'une inclinaison de la pédale d'accélération excède un seuil prédéterminé (Th2).

7. Procédé selon l'une quelconque des revendications précédentes, dans lequel, suite à une pression sur la pédale d'accélération entre une condition de relâchement complet et ledit seuil d'inclinaison prédéterminé (Th2), le procédé comprend une deuxième étape (ST2) de réduction de la cylindrée du moteur hydraulique, proportionnellement à l'inclinaison de la pédale d'accélération, sans restaurer la stratégie de commande ordinaire du moteur hydraulique.

8. Programme informatique comportant des moyens pour coder un programme, apte à réaliser toutes les étapes (ST1, ORD, ST2) de l'une quelconque des revendications 1 à 7, lorsque ledit programme est exécuté sur un ordinateur.

9. Moyens lisibles par ordinateur comprenant un programme enregistré, lesdits moyens lisibles par ordinateur comprenant des moyens de codage de programme adaptés pour effectuer toutes les étapes (ST1, ORD, ST2) de l'une quelconque des revendications 1 à 7, lorsque ledit programme est exécuté sur un ordinateur.

10. Véhicule agricole ou de travail équipé d'une transmission hydraulique (HY) dans lequel une pompe hydraulique (HP) est entraînée par un moteur primaire (E) pour alimenter un moteur hydraulique (HM), dans lequel le moteur hydraulique est raccordé de manière opérationnelle à au moins une roue du véhicule, la pompe hydraulique étant à cylindrée variable, agencée pour faire varier la cylindrée relative proportionnellement à la vitesse de rotation (Engine Speed) du moteur primaire (E), le moteur hydraulique étant à cylindrée variable électro-hydraulique, le véhicule comprenant en outre des moyens de traitement (UCM) configurés pour forcer (ST1) une augmentation de la cylindrée du moteur hydraulique (HM) jusqu'à une valeur prédéterminée, lorsque, dans des conditions dynamiques (C1) du véhicule, une pédale d'accélération correspondante est complètement relâchée (C2) et un signal (C3) indiquant la nécessité de freiner le véhicule se déclenche et lorsque la cylindrée du moteur hydraulique est augmentée suite à ladite première étape (ST1), en raison d'une pression sur la pédale d'accélération, les moyens de traitement sont en outre configurés pour rétablir la stratégie de commande ordinaire de la cylindrée du moteur hydraulique ;
ledit véhicule est en outre **caractérisé en ce que** ladite stratégie de commande ordinaire prévoit que la cylindrée du moteur hydraulique soit inversement proportionnelle à la vitesse du véhicule.
